# FASCICULE DE BREVET EUROPEEN

(11) **EP 1 008 002 B1**
(45) Date de publication et mention de la délivrance du brevet: **29.08.2001**
(21) Numéro de dépôt: 98908190.6
(22) Date de dépôt: 13.02.1998
(51) Int. Cl.: G02B 6/42, H01L 23/057

(54) **BOITIER METALLIQUE A INSERT CERAMIQUE POUR COMPOSANTS ELECTRONIQUES OU OPTOELECTRONIQUES**
METALLISCHES GEHÄUSE MIT KERAMISCHEM EINSATZTEIL FÜR ELEKTRONISCHE ODER OPTOELEKTRONISCHE BAUELEMENTE
METALLIC HOUSING WITH CERAMIC INSERT FOR ELECTRONIC OR OPTOELECTRONIC COMPONENTS

(30) Priorité: 14.02.1997 FR 9702177
(43) Date de publication de la demande: 14.06.2000
(73) Titulaire: EGIDE S.A., F-78197 Trappes (FR)
(72) Inventeur: HAVASI, Marc, F-84500 Bollène (FR); DODY, Jean-No[l, F-78370 Plaisir (FR)
(74) Mandataire: Tilloy, Anne-Marie
(86) Numéro de dépôt international: FR9800284
(87) Numéro de publication internationale: WO9836305

(56) Documents cités:
- EP-A- 0 514 213
- EP-A- 0 652 696
- US-A- 4 399 541
- US-A- 4 930 857

## Description

L'invention concerne un boîtier électronique ou optoélectronique hermétique destiné à recevoir des composants et/ou des circuits électroniques.

Des composants optoélectroniques interviennent comme convertisseur entre un signal optique et un signal électrique, ou comme convertisseur entre un signal électrique et un signal optique, ou interviennent encore comme répéteur sur câbles ou fibres optiques pour d'abord recevoir, amplifier, puis réinjecter un signal lumineux. Le développement de têtes lasers 1,3 *µ*m pour des liaisons fibres optiques courtes et moyennes distances passe encore par la mise au point de boîtiers plus performants pour l'encapsulation de ces têtes.

Le développement d'autres composants non dédiés à l'optoélectronique nécessite également la réalisation de boîtiers hermétiques et fiables.

Les deux boîtiers les plus couramment utilisés notamment pour les têtes lasers sont d'une part le boîtier DIL (pour Dual in Line Package) en raison des deux alignements de broches de connections et d'autre part le boîtier papillon (Butterfly) en raison des broches se déployant de part et d'autre du boîtier. Un boîtier optoélectronique est de forme parallélépipédique rectangle et comporte un fond et un cadre rectangulaire de hauteur variable constituant les parois latérales, dont :
- l'une est la paroi d'entrée dans laquelle est ménagée une ouverture tubulaire et qui comprend un tube de guidage pour l'introduction et le passage des fibres optiques vers puis dans le boîtier ;
- une seconde avec éventuellement également une ouverture tubulaire pour l'émission d'un signal optique ; et
- au moins l'une des autres parois restantes est munie de moyens d'acheminement entrée et/ou sortie de signaux électriques, moyens sur lesquels sont fixées des broches permettant d'établir les connexions souhaitées avec une plaquette imprimée.

### Etat de la technique

Parmi les boîtiers optoélectroniques les plus récents, il existe une première génération de boîtiers butterfly à 14 broches. Ils sont le plus souvent métalliques et sont équipés de moyens d'entrée-sortie des signaux électriques sous la forme d'inserts multicouches en céramique ou de connexions traversant une perle de verre par scellement verre-métal.

On connaît, par exemple, un boîtier à 2 x 7 broches, qui se compose, en l'examinant à partir du fond et en direction de son couvercle :
- d'une plaque de base métallique servant de fond,
- d'un premier cadre métallique, fixé par brasage sur ce fond :
   - dont l'une des parois latérales, dite paroi d'entrée, comprend une ouverture tubulaire et son tube associé pour le passage de fibres optiques ;
   - et dont les deux parois latérales opposées, perpendiculaires à cette paroi d'entrée, sont chacune d'elle entaillée, par un creux ou renfoncement ayant une forme analogue à une mortaise et destiné à placer les inserts multicouches en céramique,
   - et d'un deuxième cadre métallique fixé sur le premier cadre par brasure formant par recouvrement des creux, des lumières dans lesquelles ces inserts sont implantés.

Ce type de boîtier, facilement réalisé sur une chaîne de montage, même automatisée, est relativement volumineux, pesant et coûteux à cause du nombre de composants utilisés, et manifeste les autres inconvénients ci-dessous. Par exemple, quand le diamètre du trou à réaliser dans le cadre destiné à l'ouverture tubulaire augmente, la hauteur du premier cadre doit augmenter en relation avec le diamètre du trou et, dès lors, la réalisation du boîtier devient plus coûteuse parce que plus complexe. La mise en oeuvre de deux cadres pour la réalisation du boîtier impose un plan de brasure supplémentaire qui entraîne un risque supplémentaire de perte de l'herméticité du boîtier. De plus, les broches de connexions se déploient dans un plan parallèle au plan défini par le fond ou par le couvercle du boîtier.

Mais, l'évolution des composants électroniques et des modules d'émission-réception pour fibres optiques favorisent la création de boîtiers de plus en plus compacts. Ces boîtiers ont un volume réduit, et peuvent, par exemple, comporter un nombre de broches restreint, afin d'en diminuer le prix de réalisation, mais également leur poids et leur encombrement volumique. Il existe ainsi une deuxième génération de boîtiers à 8 broches appelés mini-DIL ou SiV package, qui sont dans un rapport dimensionnel de surface par rapport à la première génération d'environ 0,33. Ces boîtiers optoélectroniques de la deuxième génération sont généralement de type céramique. Ils sont compatibles, broche à broche, avec ceux de la première génération à 14 broches, c'est à dire qu'ils peuvent les remplacer sans nécessité de revoir la conception générale des composants internes. Ils sont notamment utilisés pour des puces lasers très stables en température et de ce fait n'intègrent pas de refroidisseurs Peltier.

On connaît, par exemple, un boîtier mini-DIL à 2 x 4 broches, qui se compose, en l'examinant à partir du fond et en direction de son couvercle :
- d'un fond formé de plusieurs couches céramiques superposées ; et
- d'un cadre formant les parois latérales, ce cadre étant constitué d'un empilement de couches céramiques façonnées, chaque couche étant conformée à la fonction qui lui est dévolue et au résultat qu'elle doit procurer quand elle est associée aux autres couches.

Ainsi, l'empilement de couches céramiques façonnées et conformées conduit à la création des parois latérales du boîtier. L'une des parois, dite paroi d'entrée, comprend un orifice formant tunnel obtenu par cet empilement, et qui permet le raccordement des fibres optiques à la partie interne du boîtier. Deux autres parois opposées, celles perpendiculaires à la paroi d'entrée, comportent, dans la masse, les moyens d'acheminement des signaux électriques, moyens auxquels sont attachées les broches pour la connexion. Et par dessus l'empilement des couches de céramique formant le fond et les parois latérales du boîtier, est placé un cadre métallique pour permettre la fermeture hermétique du boîtier au moyen d'un couvercle.

Ce type de boîtier, plus compact, présenté toutefois des inconvénients qu'il est important de souligner. Par exemple, l'évolution du diamètre nécessaire au passage des fibres optiques oblige à repenser la conception (épaisseur, ...) de certaines couches de céramique pour que les fonctions qui leur sont dévolues conduisent aux résultats attendus par l'empilement des diverses couches évidées. Ces changements de dimensions sont évidemment coûteux par les nombreuses modélisations nouvelles qu'ils exigent. La formation d'un boîtier par empilage de couches céramiques, en particulier dans la zone de l'orifice formant tunnel, impose que les diverses couches céramiques destinées à la formation du cadre par empilement, disposent de zones non évidées pour donner une résistance mécanique suffisante. Les zones de bonne résistance mécanique créent une augmentation inutile du volume du boîtier. Le blindage contre les phénomènes électromagnétiques peut s'avérer insuffisant quand le boîtier est soumis à des hautes fréquences. Enfin, la fermeture hermétique du boîtier ne peut se faire de manière fiable selon n'importe quelle méthode : la méthode la plus adaptée est le brasage mais l'élévation de la température nécessaire introduit des contraintes supplémentaires à l'égard des composants et/ou des circuits électroniques présents dans le boîtier.

Le EP-A- 514 213 décrit deux procédés de réalisation d'un boîtier. Dans le premier, une bande est découpée dans une plaque métallique. Des zones de pliures sont marquées voire légèrement entaillées et des lumières ou des entailles sont réalisées, lumières ou entailles qui seront pour des moyens d'acheminement des signaux de transmission optique ou électrique. La bande est ensuite repliée sur elle-même puis soudée pour former le cadre définitif. Le cadre est finalement fixé au fond. Dans le deuxième des procédés, la forme générale et complète du boîtier est découpée dans une plaque métallique. Des zones de pliures sont marquées voire légèrement entaillées et des lumières ou des entailles sont réalisées, lumières ou entailles qui seront pour des moyens d'acheminement des signaux de transmission optique ou électrique. La bande et le fond sont ensuite repliés sur eux mêmes puis soudés pour former le boîtier complet définitif.

Les inconvénients majeurs de ces procédés résident dans la présence de zones de pliures et dans la présence d'arêtes ou de faces soudées qui affectent la résistance mécanique du cadre et du boîtier. La présence d'un cordon de soudure affleurant peut être gênante pour la refermeture par brasure du boîtier par le couvercle. De plus, une bonne précision de repliage, d'ajustage et de soudage doit être difficile à atteindre.

Le US-A-4 930 857 décrit un boîtier métallique électronique et optoélectronique renfermant un composant multicouches céramique. Le cadre comprend à sa base une échancrure rectangulaire pour le passage du composant multicouche céramique. Ce composant, par ailleurs avec toute l'électronique associée, est posé directement sur le fond du boîtier et le cadre vient s'adapter sur le fond enserrant ainsi le composant.

Un inconvénient majeur de ce type d'agencement de boîtier est que bien que le cadre soit annulaire et d'un seul tenant, le composant reste posé sur le fond et toute la partie électronique, notamment avec ses pistes conductrices et ses contacts électriques, doit s'adapter à la hauteur, toujours constante, fixée d'avance par l'échancrure pour ce composant. Un autre inconvénient est que la planéité du cadre va être difficile à obtenir lors du brasage sur le fond. Ces déformations vont entraîner un manque d'herméticité entre le cadre et le composant céramique ou entre le composant céramique et le fond.

On connaît d'après le EP- 652 696 un boîtier pour composants optoélectroniques, sensiblement parallélépipédique, destiné à recevoir un ou plusieurs moyens d'acheminement de signaux de transmission entre l'extérieur et les composants optoélectroniques disposés à l'intérieur, comprenant un fond et un cadre annulaire constituant des parois.

### Exposé de l'invention

C'est pourquoi, un objet de l'invention vise à la réalisation d'un boîtier électronique ou optoélectronique éliminant tout ou partie desdits inconvénients et doté, en particulier, d'une haute capacité de blindage autorisant une exploitation améliorée dans le domaine des hautes fréquences.

Un premier problème posé est de réaliser un boîtier, dont le cadre est en un seul tenant, qui s'adapte à tout type d'électronique en ayant des ouvertures pouvant être placées à la base du boîtier.

Un autre problème posé est de réaliser un boîtier dont le cadre est simultanément métallique, avec un pourtour sans discontinuités, et est percé d'une ou plusieurs lumières.

Un autre problème encore est de réaliser un boîtier dont les moyens d'acheminement de signaux sont insérés au sein du cadre en un seul matériau et monobloc, afin de donner au boîtier final une stabilité globale mécanique et thermique.

Selon l'invention, un boîtier pour composants électroniques ou optoélectroniques, sensiblement parallélépipédique rectangle, comprend un fond et un cadre métallique annulaire rectangle constituant des parois latérales, ainsi qu'au moins une ouverture destinée à recevoir un moyen d'acheminement de signaux de transmission électrique entre l'extérieur et les composants électroniques ou optoélectroniques disposés à l'intérieur.

Ce boîtier est caractérisé en ce que ladite au moins une ouverture est constituée par une entaille ménagée en position chevauchante sur l'une desdites parois latérales et sur le fond, ladite entaille faisant apparaître simultanément une tranche latérale de l'épaisseur du fond et une tranche de l'épaisseur à la base du cadre.

Dans ce mode de réalisation, particulièrement adapté au boîtier de type mini-DIL, la hauteur du cadre étant peu importante, la place pour ouvrir une lumière s'avère insuffisante. Le choix pour l'insert s'est ainsi porté sur une ou plusieurs arêtes inférieures du boîtier. Un deuxième problème résolu est que l'insert est uniquement brasé sur deux de ses faces. Cet insert n'est ainsi pas contraint au niveau des dilatations thermiques et se trouve libre pour se dilater en direction de ses deux faces restant libres. Un autre problème résolu est que les broches de connections peuvent aisément être dirigées vers le bas soit perpendiculairement par rapport au fond.

Dans l'invention, le cadre est ininterrompu, sans cordon de soudure, ni coins de pliures. Par signaux de transmission, on entend signaux électriques et/ou optiques.

D'autres avantages des boîtiers selon l'invention apparaîtront à la lecture de l'exemple de réalisation détaillé de l'invention, en se référant aux dessins donnés à titre d'illustration, dans lequel :

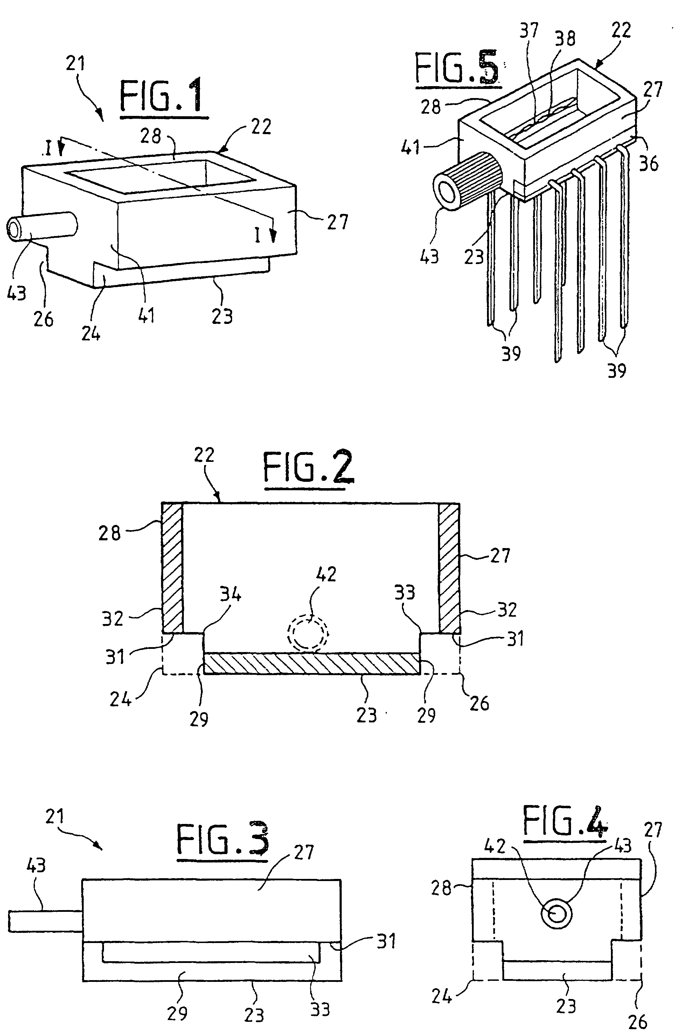

- la Figure 1 représente une vue en perspective d'un boîtier à fond intégré au cadre monobloc, mais démuni d'insert céramique, selon l'invention ;
- la Figure 2 représente une coupe transversale du boîtier selon la ligne I - I de la Figure 1 ;
- la Figure 3 représente une vue de côté du boîtier de la Figure 1 ;
- la Figure 4 représente une vue avant d'un boîtier à fond rapporté muni de son couvercle ; et
- la Figure 5 représente une vue perspective d'un boîtier optoélectronique selon l'invention, avec un cadre à fond intégré, l'ouverture tubulaire, les inserts dotés des moyens d'acheminement des signaux électriques et les broches.

### Description détaillée de l'invention

Un boîtier 21 comprend un cadre monobloc 22 qui présente la forme qu'ont généralement les cadres de boîtiers hermétiques : il est de forme parallélépipédique rectangle. Le cadre 22, qui est continu, possède quatre parois latérales. Ces parois définissent un pourtour qui peut être latéral extérieur, latéral intérieur, de tranche supérieure ou de tranche inférieure, selon l'angle sous lequel on se place pour le voir, et qui n'a aucune discontinuité (de raccordement, ...). Le boîtier 21 est muni d'un fond 23 dont l'épaisseur peut être identique ou différente de celle de ses parois latérales par exemple.

Le matériau avec lequel est réalisé le cadre est un matériau métallique pouvant avoir de préférence un coefficient de dilatation thermique adapté à celui de la céramique utilisée, tel que un alliage du fer-nickel-cobalt connu sous le nom de marque KOVAR® (norme ASTM F15). Le cadre et le fond sont réalisés en alliage métallique KOVAR® et sont rendus hermétiquement solidaires par une fixation métal-métal, telle qu'une brasure.

Le fond 23 du boîtier 21 peut être réalisé dans un matériau métallique différent ou identique à celui utilisé dans la réalisation du cadre 22 selon qu'il est souhaité de disposer d'un boîtier à forte dissipation thermique ou non.

Dans le cas où une forte dissipation thermique est souhaitée, le matériau constitutif du fond peut être préférentiellement choisi dans le groupe constitué par le cuivre seul, un mélange de cuivre-tungstène, cuivre-molybdène, ou encore de l'oxyde de béryllium, du nitrure d'aluminium, ces deux derniers étant au moins partiellement métallisés.

Le fond 23 du boîtier 21 peut être initialement indépendant du cadre et, dans ce cas, il y est rapporté à la base du cadre, par un moyen de fixation métal sur métal tel que, par exemple, par brasage, refusion électrique ou au laser. Mais, le fond 23 peut également être une partie intégrante du cadre monobloc 22 quand la structure du boîtier 21 est réalisée par emboutissage, par usinage ou par métallurgie des poudres. En plus du cadre sans discontinuités, on constitue ainsi un boîtier monobloc, sans discontinuités de soudures, ni zones d'affaiblissements.

Dans le cadre des boîtiers optoélectroniques, l'une au moins des parois latérales 41 est percée d'une ouverture circulaire tubulaire 42 permettant le passage et la pénétration des moyens d'acheminement de signaux de transmission optique sous forme de fibres optiques à l'intérieur du boîtier 21. Un élément en forme de tube 43 est inséré dans l'ouverture tubulaire 42 et sert à guider et à diriger précisément le faisceau de fibres optiques vers les parties internes à circuits optoélectroniques du boîtier. Le diamètre et la hauteur de l'orifice 42 sur la paroi 41 ne conditionne pas les côtes finales du boîtier : il n'y a donc pas d'interventions coûteuses à prévoir, par exemple en bureau d'études et en production pour adapter le diamètre de l'ouverture tubulaire aux dimensions souhaitées pour le boîtier.

Dans un autre mode de réalisation, le cadre monobloc est muni d'un fond intégré, dont l'épaisseur est plus importante que celle des parois latérales par exemple. Le cadre et le fond intégré constituent un ensemble monobloc réalisé par usinage d'un bloc de KOVAR®. Le fond peut aussi être rapporté par brasure à la base du cadre.

Le cadre métallique 22 comprend deux entailles opposées 24, 26 placées en position chevauchante sur deux des parois latérales opposées 27, 28 et sur le fond 23. Les entailles rendent visibles simultanément une tranche latérale 29 de l'épaisseur du fond 23 et une tranche 31 de l'épaisseur à la base 32 du cadre 22.

Ces deux entailles 24, 26 font également apparaître respectivement deux ouvertures 33, 34. Ces ouvertures 33, 34 sont placées en position basse, à la limite du fond 23 du boîtier 21 et de par leur positions présentent également un emplacement chevauchant sur les parois 27, 28 et le fond 23. Ces entailles s'étendent sur toute la longueur des deux arêtes paroi-fond du boîtier 21.

Ces deux entailles sont destinées à recevoir deux éléments inserts multicouches céramiques 36, 37 servant de moyens d'acheminement des signaux électriques. Ces inserts sont hermétiquement fixés simultanément à la tranche latérale 29 de l'épaisseur du fond 23 et à la tranche 31 de l'épaisseur à la base 32 du cadre 22, notamment par brasage. Les entailles ont une forme parallélépipédique correspondant à la forme parallélépipédique des inserts. De ce fait, les arêtes apparentes et externes des inserts deviennent les arêtes du boîtier 21.

Ces éléments multicouches céramique 36, 37 possèdent chacun des via conductrices s'étendant dans un plan parallèle à la paroi latérale du cadre 27, 28. Sur les inserts céramiques, à l'intérieur du boîtier 21, on y connecte sur des contacts 38, des composants et/ou circuits électroniques souhaités et, à l'extérieur, des broches de connexion 39. Chaque via conductrice assure la connexion électrique au sein des couches céramiques entre chaque contact interne 38 et chaque broche extérieure 39.

De par la disposition des inserts et des via conductrices, les broches 39 sont situées dans un plan parallèle au plan défini par les parois latérales 27, 28 du cadre 22. Ceci permet une nouvelle connexion sur la carte imprimée et un gain de place appréciable.

Un premier procédé de fabrication d'un boîtier pour composants électroniques ou optoélectroniques, sensiblement parallélépipédique avec un fond et un cadre constituant les parois du boîtier et destiné à recevoir un ou plusieurs moyens d'acheminement de signaux de transmission entre l'extérieur et les composants électroniques ou optoélectroniques disposés à l'intérieur, comprend les étapes consistant à découper transversalement un cadre dans un tube métallique ayant une section en parallélogramme ; percer par usinage une ou plusieurs entailles dans le cadre obtenu après découpe, la ou les entailles étant constituées pour l'insertion ultérieure des moyens d'acheminement de signaux de transmission ; et fixer ledit cadre sur le fond.

Un autre procédé de fabrication d'un boîtier pour composants électroniques ou optoélectroniques, sensiblement parallélépipédique avec un fond et un cadre constituant les parois du boîtier et destiné à recevoir un ou plusieurs moyens d'acheminement de signaux de transmission entre l'extérieur et les composants électroniques ou optoélectroniques disposés à l'intérieur, comprend les étapes consistant à emboutir une plaque métallique pour lui donner une forme analogue à une cuvette et former ainsi une ébauche ; usiner l'ébauche en arasant le fond pour obtenir un cadre ; poinçonner le cadre de façon à tailler une ou plusieurs entailles, la ou les entailles étant constituées pour l'insertion ultérieure des moyens d'acheminement de signaux de transmission ; et fixer ledit cadre obtenu sur le fond.

Un autre procédé encore de fabrication d'un boîtier pour composants électroniques ou optoélectroniques, sensiblement parallélépipédique avec un fond et un cadre constituant les parois du boîtier et destiné à recevoir un ou plusieurs moyens d'acheminement de signaux de transmission entre l'extérieur et les composants électroniques ou optoélectroniques disposés à l'intérieur, comprend les étapes consistant à usiner un bloc métallique pour lui donner la forme parallélépipédique creuse finale du boîtier et poinçonner ensuite la ou les entailles, la ou les entailles étant constituées pour l'insertion ultérieure des moyens d'acheminement de signaux de transmission.

Enfin, quand toutes les pièces participant à la construction des boîtiers, selon les aspects de l'invention, sont assemblées par l'intermédiaire de fixations céramique-métal, le cas échéant métal-métal ou verre-métal, tel que par brasage par exemple et que les broches ont été assemblées par brasage sur les moyens d'acheminement des signaux électriques portés par l'insert céramique, l'ensemble du boîtier peut être soumis à un traitement partiel ou total de nickelage et/ou de dorure. Ce traitement peut être également réalisé sur un boîtier sans ses inserts ou connections.

Les boîtiers selon l'invention ne sont pas limités par les détails des modes de réalisation et des exemples choisis pour les illustrer. Des modifications peuvent être apportées sans pour autant sortir du cadre de l'invention. Par exemple, le nombre de d'entailles dans une même paroi ou au sein du boîtier, le nombre correspondant d'inserts céramiques ou de moyens d'acheminement des signaux et les dimensions et formes de toutes ces entailles peuvent varier. Cette dernière englobe par conséquent tous les moyens constituant des équivalents techniques des moyens décrits ainsi que leur combinaison.

## Revendications

1. Boîtier (21) pour composants électroniques ou optoélectroniques, sensiblement parallélépipédique rectangle, comprenant un fond (23) et un cadre métallique annulaire rectangle (22) constituant des parois latérales (27, 28, 41), ainsi qu'au moins une ouverture (33, 34), destinée à recevoir un moyen d'acheminement de signaux de transmission électrique (36, 37) entre l'extérieur et les composants électroniques ou optoélectroniques disposés à l'intérieur, **caractérisé en ce que** ladite au moins une ouverture (33,34) est constituée par une entaille (24, 26) ménagée en position chevauchante sur l'une desdites parois latérales (27, 28) et sur le fond (23), ladite entaille faisant apparaître simultanément une tranche latérale (29) de l'épaisseur du fond (23) et une tranche de l'épaisseur (31) à la base du cadre (32).

2. Boîtier selon la revendication 1, **caractérisé en ce que** ladite entaille (24, 26) s'étend sur toute la longueur d'une arête du boîtier.

3. Boîtier selon la revendication 1 ou 2, **caractérisé en ce qu**'il possède en outre au moins un moyen d'acheminement de signaux de transmission électrique entre l'extérieur et les composants électroniques ou optoélectroniques disposés à l'intérieur, sous la forme d'au moins un élément multicouche céramique (36, 37), inséré dans ladite entaille (24, 26) et fixé simultanément à la tranche latérale (29) de l'épaisseur du fond (23) et à la tranche de l'épaisseur à la base du cadre (31).

4. Boîtier selon la revendication 3, **caractérisé en ce que** ledit au moins un élément multicouche céramique (36, 37) possède au moins une via conductrice dans un plan parallèle à la paroi latérale du cadre (27, 28) à laquelle il est fixé.

5. Boîtier selon la revendication 3 ou 4, **caractérisé en ce que** des broches de connexion (39) sont fixées audit au moins un moyen d'acheminement de signaux de transmission électrique (36, 37) dans la partie extérieure du boîtier, les broches (39) s'étendant sur une majeure partie de leur longueur dans un plan parallèle au plan défini par les parois latérales du cadre (27, 28).

6. Boîtier selon l'une des revendications précédentes, **caractérisé en ce qu**'il possède deux éléments multicouches céramique (36, 37) fixés dans deux parois latérales opposées (27, 28).

7. Boîtier selon l'une des revendications précédentes, **caractérisé en ce que** l'une au moins des parois latérales (41) du cadre (22) est en outre percée d'une ouverture tubulaire (42) pour un moyen d'acheminement de signaux de transmission optique à fibres optiques entre l'extérieur et les composants optoélectroniques disposés à l'intérieur.

8. Boîtier selon l'une des revendications précédentes, **caractérisé en ce que** le cadre (22) est réalisé en un alliage métallique, préférentiellement un alliage de fer-nickel-cobalt dénommé KOVAR® .

9. Boîtier selon l'une des revendications précédentes, **caractérisé en ce que** le fond (23) est dans le même matériau que le cadre (22).

10. Boîtier selon l'une des revendications précédentes, **caractérisé en ce que** le fond (23) est intégré au cadre (22), constituant un boîtier monobloc (21) sans discontinuités.

11. Boîtier selon l'une des revendications précédentes, **caractérisé en ce que** le fond (23) est préférentiellement réalisé en cuivre, en un mélange cuivre-tungstène ou cuivre-molybdène, en oxyde de béryllium ou en nitrure d'aluminium.

12. Boîtier selon l'une des revendications précédentes, **caractérisé en ce que** le fond (23) est rapporté à la base du cadre (22).

## Patentansprüche

1. Gehäuse (21) für elektronische oder optoelektronische Bauteile größtenteils in Form eines rechteckigen Parallelepipeds, das einen Boden (23) und einen rechteckigen, ringförmigen Metallrahmen (22), der Seitenwände (27, 28, 41) bildet, sowie wenigstens eine Öffnung (33, 34) enthält, die dazu dient, eine Einrichtung (36, 37) zum Leiten elektrischer Übertragungssignale zwischen der Außenseite und den elektronischen oder optoelektronischen Bauteilen, die sich im Inneren befinden, aufzunehmen, **dadurch gekennzeichnet,** dass die wenigstens eine Öffnung (33, 34) durch eine Aussparung (24, 26) gebildet wird, die an einer überlappenden Position an einer der Seitenwände (27, 28) und am Boden (23) ausgebildet ist, wobei die Aussparung sowohl eine seitliche Abschlussfläche (29) der Dicke des Bodens (23) als auch eine Abschlussfläche der Dicke (31) an der Unterseite des Rahmens (32) sichtbar macht.

2. Gehäuse nach Anspruch 1, **dadurch gekennzeichnet,** dass sich die Aussparung (24, 26) über die gesamte Länge einer schneidenden Kante des Gehäuses erstreckt.

3. Gehäuse nach Anspruch 1 oder 2, **dadurch gekennzeichnet,** dass es des Weiteren wenigstens eine Einrichtung zum Leiten elektrischer Übertragungssignale zwischen der Außenseite und den elektronischen oder optoelektronischen Bauteilen, die sich im Inneren befinden, in Form wenigstens eines keramischen Mehrschichtelementes (36, 37) aufweist, das in die Aussparung (24, 26) eingeführt und sowohl an der seitlichen Abschlussfläche (29) der Dicke des Bodens (23) als auch der Abschlussfläche der Dicke an der Unterseite des Rahmens (31) befestigt wird.

4. Gehäuse nach Anspruch 3, **dadurch gekennzeichnet**, dass das wenigstens eine keramische Mehrschichtelement (36, 37) wenigstens eine leitende Durchgangsleitung in einer Ebene parallel zu der Seitenwand (27, 28) des Rahmens aufweist, an der es befestigt ist.

5. Gehäuse nach Anspruch 3 oder 4, **dadurch gekennzeichnet,** dass die Anschlussstifte (39) an der wenigstens einen Einrichtung (36, 37) befestigt sind, um elektrische Übertragungssignale im äußeren Teil des Gehäuses zu leiten, wobei sich die Stifte (39) über den Großteil ihrer Länge in einer Ebene parallel zu der Ebene erstrecken, die durch die Seitenwände (27, 28) des Rahmens gebildet wird.

6. Gehäuse nach einem der vorangehenden Ansprüche, **dadurch gekennzeichnet,** dass es zwei keramische Mehrschichtelemente (36, 37) aufweist, die an zwei einander gegenüberliegenden Seitenwänden (27, 28) befestigt sind.

7. Gehäuse nach einem der vorangehenden Ansprüche, **dadurch gekennzeichnet,** dass wenigstens eine der Seitenwände (41) des Rahmens (22) des Weiteren von einer röhrenförmigen Öffnung (42) für eine Lichtleitereinrichtung zum Leiten von optischen Übertragungssignalen zwischen der Außenseite und den optoelektronischen Bauteilen, die sich im Inneren befinden, durchdrungen wird.

8. Gehäuse nach einem der vorangehenden Ansprüche, **dadurch gekennzeichnet,** dass der Rahmen (22) aus einer Metalllegierung besteht, vorzugsweise einer Eisen-Nickel-Kobalt-Legierung, die als KOVAR® bezeichnet wird.

9. Gehäuse nach einem der vorangehenden Ansprüche, **dadurch gekennzeichnet,** dass der Boden (23) aus dem gleichen Material besteht wie der Rahmen (22).

10. Gehäuse nach einem der vorangehenden Ansprüche, **dadurch gekennzeichnet,** dass der Boden (23) in den Rahmen (22) integriert ist, so dass ein aus einem Stück bestehendes Gehäuse ohne Absätze entsteht.

11. Gehäuse nach einem der vorangehenden Ansprüche, **dadurch gekennzeichnet,** dass der Boden (23) vorzugsweise aus Kupfer, einer Kupfer-Wolfram- oder Kupfer-Molybdän-Legierung, Berylliumoxid oder Aluminiumnitrid besteht.

12. Gehäuse nach einem der vorangehenden Ansprüche, **dadurch gekennzeichnet,** dass der Boden (23) an der Unterseite des Rahmens (22) angebracht ist.

## Claims

1. A housing (21) for electronic or optoelectronic components, substantially rectangular parallelepiped, which includes a bottom (23) and a rectangular annular metal frame (22) forming side walls (27, 28, 41), as well as at least one opening (33, 34) intended to receive a means (36, 37) for conveying electrical transmission signals between the outside and the electronic or optoelectronic components placed inside, **characterized in that** the said at least one opening (33, 34) is formed by a notch (24, 26) made in an overlapping position on one of the said side walls (27, 28) and on the bottom (23), the said notch making visible both a lateral end face (29) of the thickness of the bottom (23) and an end face of the thickness (31) at the base of the frame (32).

2. A housing according to Claim 1, **characterized in that** the said notch (24, 26) extends over the entire length of an intersecting edge of the housing.

3. A housing according to Claim 1 or 2, **characterized in that** it furthermore has at least one means for conveying electrical transmission signals between the outside and the electronic or optoelectronic components placed inside, in the form of at least one ceramic multilayer element (36, 37) inserted into the said notch (24, 26) and fastened both to the lateral end face (29) of the thickness of the bottom (23) and to the end face of the thickness at the base of the frame (31).

4. A housing according to Claim 3, **characterized in that** the said at least one ceramic multilayer element (36, 37) has at least one conducting path in a plane parallel to that side wall (27, 28) of the frame to which it is fastened.

5. A housing according to Claim 3 or 4, **characterized in that** the connection pins (39) are fastened to the said at least one means (36, 37) for conveying electrical transmission signals in the outer part of the housing, the pins (39) extending over most of their length in a plane parallel to the plane defined by the side walls (27, 28) of the frame.

6. A housing according to one of the preceding claims, **characterized in that** it has two ceramic multilayer elements (36, 37) fastened in two opposed side walls (27, 28).

7. A housing according to one of the preceding claims, **characterized in that** at least one of the side walls (41) of the frame (22) is furthermore pierced by a tubular opening (42) for a fiber-optic means for conveying optical transmission signals between the outside and the optoelectronic components placed inside.

8. A housing according to one of the preceding claims, **characterized in that** the frame (22) is made of a metal alloy, preferably an iron-nickel-cobalt alloy called KOVAR® .

9. A housing according to one of the preceding claims, **characterized in that** the bottom (23) is made of the same material as the frame (22).

10. A housing according to one of the preceding claims, **characterized in that** the bottom (23) is integrated into the frame (22), forming a one-piece housing (21) without any discontinuities.

11. A housing according to one of the preceding claims, **characterized in that** the bottom (23) is preferably made of copper, a copper-tungsten or copper-molybdenum alloy, beryllium oxide or aluminum nitride.

12. A housing according to one of the preceding claims, **characterized in that** the bottom (23) is attached to the base of the frame (22).
